# EUROPEAN PATENT SPECIFICATION

(11) **EP 3 847 922 B1**
(45) Date of publication and mention of the grant of the patent: **09.08.2023**
(21) Application number: 19856707.5
(22) Date of filing: 05.09.2019
(51) Int. Cl.: A45B 9/00, A45B 9/02, F16B 7/10

(54) **LENGTH ADJUSTMENT DEVICE**
LÄNGENANPASSUNGSVORRICHTUNG
DISPOSITIF DE RÉGLAGE DE LONGUEUR

(30) Priority: 05.09.2018 KR 20180106162; 30.08.2019 KR 20190107614
(43) Date of publication of application: 14.07.2021
(73) Proprietor: Dong-in Entech Co., Ltd., Gimpo-si, Gyeonggi-do 10030 (KR); Lee, Myeong A, Goyang-si, Gyeonggi-do 10449 (KR)
(72) Inventor: LEE, Myeong A, Goyang-si, Gyeonggi-do 10449 (KR); JUNG, In Soo, Goyang-si, Gyeonggi-do 10325 (KR)
(74) Representative: Betten & Resch
(86) International application number: PCT/KR2019/011504
(87) International publication number: WO 2020/050658

(56) References cited:
- WO-A1-2015/034182
- JP-A- 2010 088 871
- KR-A- 20160 141 006
- KR-A- 20160 150 447
- KR-A- 20180 005 586
- KR-B1- 101 261 788
- KR-B1- 101 766 779
- US-A1- 2004 000 622
- US-A1- 2018 184 769

## Description

### TECHNICAL FIELD

The present invention relates to a length adjustment device, and more particularly, to a length adjustment device which can be conveniently used by freely adjusting the length thereof and easily fixing the adjusted length.

### BACKGROUND ART

In general, an alpenstock is designed to adjust a height thereof.

Mountain climbing refers to an act of climbing mountains, and climbers train their minds and bodies and restore pleasure through the mountain climbing. Currently, some climbers climb mountains as leisure or sport, and other climbers climb dangerous mountains as a challenge to the unknown world. It is necessary for a climber to support the weight of the body when the climber goes up or down a mountain or to maintain body balance when the climber climbs a mountain having uneven ground. Accordingly, the alpenstock has recently regarded as an essential item for climbers. The demand for the alpenstock has gradually increased, and alpenstocks having various functions have been released.

Such an alpenstock not only serves as a simple stick but also allows burden of walking which depends on user's two legs to be shared with user's arms. Thus, exhaustion of user's physical strength can be reduced, and the speed of walking can be increased with safety.

That is, the alpenstock is a chief guide which enables balance of the user to be maintained on an uneven ground and reduces impact of user's knees when the user goes down a mountain. When the user stands up while holding the alpenstock, the angle of an elbow joint is ideally 90 degrees, and the alpenstock is preferably used to have a length longer by 10 to 15 cm as usual when the user goes up a slope way or hill. It is necessary for the user to use the alpenstock by adjusting the height of the alpenstock to be suitable for the user's body according to several situations.

As a conventional art related to this, Patent Document 1 is illustrated in FIG. 1. An alpenstock includes a contact part 1, a length adjustment means 2, a buzzer 3, and a luminous band 4. The contact part 1 is provided as a rubber pad at a lowermost portion of the alpenstock, to be in surface contact with the ground when a user puts the alpenstock on the ground and to absorb shock power. The length adjustment means 2 is provided such that the length of the alpenstock is adjusted by inserting or extracting a lower pole 2c to which the contact part 1 is fixed into or from an upper pole 2a, and simultaneously, is fixed by tightening a nut 2b after the adjustment of the length is completed. The buzzer 3 is built in a handle 5 fixed to one side of the upper pole 2a, and is operated according to whether a push part 3a partially protruding to the outside is connected or not. The luminous band 4 surrounds each of the upper and lower poles 2a and 2c to decorate the alpenstock, and is provided such that the alpenstock can be easily recognized.

However, the alpenstock in accordance with the conventional art requires a large amount of power when the height of the alpenstock is adjusted. Therefore, it is very inconvenient to manipulate the alpenstock, and even a strong man cannot easily manipulate the alpenstock in addition to a woman or old man. In addition, it takes much time to manipulate the alpenstock, and it is inconvenient for the user to expand/contract the height of the alpenstock to a degree which the user wants and to fix the expanded/contracted height of the alpenstock, which results in deterioration of usability and convenience.

Document US 2018 / 184769 A1 relates to a length adjustment device the length of which can be freely adjusted for expansion and retraction.

Document KR 2018 0005586 A relates to a climbing stick which can be freely adjusted in its length and elongation.

### DISCLOSURE

### TECHNICAL PROBLEM

The present invention is conceived to solve the aforementioned problems. Accordingly, an object of the present invention is to provide a length adjustment device which can be conveniently used by freely adjusting the length thereof and easily fixing the adjusted length.

### TECHNICAL SOLUTION

The present invention is defined in independent claim 1. Embodiments are defined in the dependent claims. There is provided a length adjustment device including: a handle including a push button; a main pole coupled to the handle; an expansion pole retracted/extracted into/from the main pole; and a length adjustment means enabling the expansion pole to be retracted/extracted into/from the main pole through manipulation of the push button, thereby adjusting the entire length, wherein the length adjustment means includes: a weight transfer means installed at the inside of the main pole, the weight transfer means transferring a weight of the push button; a spin pipe assembly fixedly installed at the inside of the expansion pole; and a clamp assembly installed throughout a boundary between the main pole and the expansion pole, the clamp assembly allowing the spin pipe assembly to maintain a lock state or an unlock state by pressurizing the spin pipe assembly to the outside or by releasing the pressurization.

The spin pipe assembly includes: a spin cover pipe fixedly installed at the inside of the expansion pole; and a spin pipe accommodated in the spin cover pipe, the spin pipe having round-shaped grooves machined at a constant pitch at an inner circumferential surface thereof.

Specifically, when the spin pipe assembly maintains the lock state by the clamp assembly and then is in the unlock state by a push operation of the push button, the spin pipe assembly may vertically move together with the expansion pole such that the expansion pole is retracted/extracted into/from the main pole.

The spin pipe is provided in plurality. The plurality of spin pipes is configured as a long spin pipe which is relatively long, a plurality of short spin pipes which are relatively short, and a last spin pipe which is similar to the short spin pipe, and be inserted into the spin cover pipe through one end portion of the spin cover pipe in a sequence of the long spin pipe, the short spin pipes, and the last spin pipe.

Specifically, the clamp assembly may include: a main clamp installed at the inside of the spin pipe, the main clamp allowing the spin pipe to maintain the lock state by restricting the spin pipe or allowing the spin pipe to maintain the unlock state by releasing the spin pipe; a clamp rod inserted and installed in the main clamp, the clamp rod being connected to the weight transfer means to be retracted from the main clamp by receiving a weight caused by a push operation of the push button; and a clamp spring allowing the clamp rod to maintain a state in which the clamp rod is retracted into the main clamp, when the weight of the push button is released.

Specifically, the main clamp may have the entire shape which is a cylindrical shape having a hollow, and include a plurality of cut grooves formed in a length direction from one end portion of a clamp body and a plurality of fingers formed by the plurality of cut grooves. A projection may be provided outwardly at an end portion of each of the plurality of fingers.

Specifically, the clamp rod may include: a body part formed to have a diameter corresponding to that of the hollow of the main clamp; a head part having a diameter greater than that of the body part, the head part allowing the fingers to move in a circumferential direction while being retracted into the inside of the fingers, so that the projections are stuck in the groove; and a tail part having the clamp spring inserted therearound, the tail part being connected to the weight transfer means.

Specifically, the body part may have a taper shape of which diameter becomes smaller as becoming closer to the head part. A tapered portion of the body part may be a portion at which the fingers are seated while being contracted when the head part is extracted from the fingers.

Specifically, the weight transfer means may include: a start rod assembly installed throughout a boundary between the handle and the main pole, the start rod assembly being connected to the push button; and an action rod assembly installed at the inside of the main pole, the action rod assembly connecting the start rod assembly and the clamp assembly to each other.

Specifically, the start rod assembly, the action rod assembly, and the clamp assembly may be connected in a straight line to serve as a fixed shaft. The spin pipe assembly may serve as a run shaft. When the spin pipe assembly is in the unlock state by the clamp assembly according to a push operation of the push button, the spin pipe assembly may vertically move together with the expansion pole along the fixed shaft, so that the expansion pole is retracted/extracted into/from the main pole.

### ADVANTAGEOUS EFFECTS

In the length adjustment device in accordance with the present invention, the length to a degree which the user wants can be freely adjusted and the fixing of the adjusted length can be easily made through the push button. In addition, detailed length adjustment of the expansion pole is possible, and lock power is increased. In addition, length adjustment is smoothly and flexibly operated with respect to a ground.

Also, in the length adjustment device in accordance with the present invention, the entire length of the device can be easily changed only through manipulation of only one push button. In addition, after the device is contracted to a degree which the user wants, the contracted length can be easily fixed with a small force, which is convenient. In addition, a user can rapidly manipulate the device under various use environments, so that the device can have excellent usability and convenience.

### BRIEF DESCRIPTION OF THE DRAWINGS

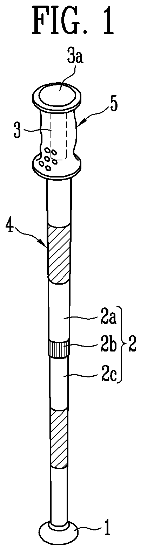

FIG. 1 is a perspective view of a conventional length adjustment device.
FIG. 2 is a perspective view illustrating an appearance when a length adjustment device is contracted in accordance with an embodiment of the present invention.
FIG. 3 is a perspective view illustrating an appearance when the length adjustment device is expanded in accordance with the embodiment of the present invention.
FIG. 4 is an exploded perspective view of the length adjustment device in accordance with the embodiment of the present invention.
FIG. 5 is an exploded perspective view of a handle in accordance with the present invention.
FIG. 6 is a sectional view of the handle in accordance with the present invention.
FIG. 7 is a partial exploded perspective view of a length adjustment means in accordance with the present invention.
FIG. 8 is another partial exploded perspective view of the length adjustment means in accordance with the present invention.
FIG. 9 is an exploded perspective view of a clamp assembly of the length adjustment means in accordance with the present invention.
FIG. 10 is a partial perspective view of the clamp assembly of the length adjustment means in accordance with the present invention.
FIG. 11 is a partial sectional view of a spin pipe assembly of the length adjustment means in accordance with the present invention.
FIG. 12 is a sectional view illustrating an operation of the length adjustment device in accordance with the embodiment of the present invention.
FIG. 13 is a sectional view of the clamp assembly, illustrating a lock state of the length adjustment device in accordance with the embodiment of the present invention.
FIG. 14 is a sectional view of the clamp assembly, illustrating an unlock state of the length adjustment device in accordance with the embodiment of the present invention.

### MODE FOR THE INVENTION

Other objects, specific advantages, and new features of the present invention will be more apparent from preferable embodiments and the following detailed description associated with the accompanying drawings. In the specification, when reference numerals are endowed to components in each drawing, it should be noted that like reference numerals denote like elements even though they are depicted in several drawings. Further, in the following description of the present invention, a detailed explanation of known related technologies may be omitted to avoid unnecessarily obscuring the subject matter of the present invention.

Hereinafter, exemplary embodiments of the present invention will be described in detail with reference to the accompanying drawings.

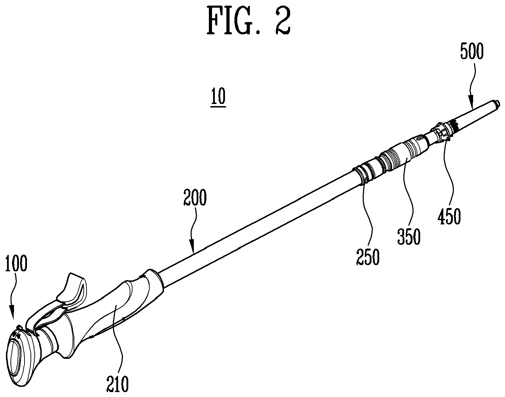

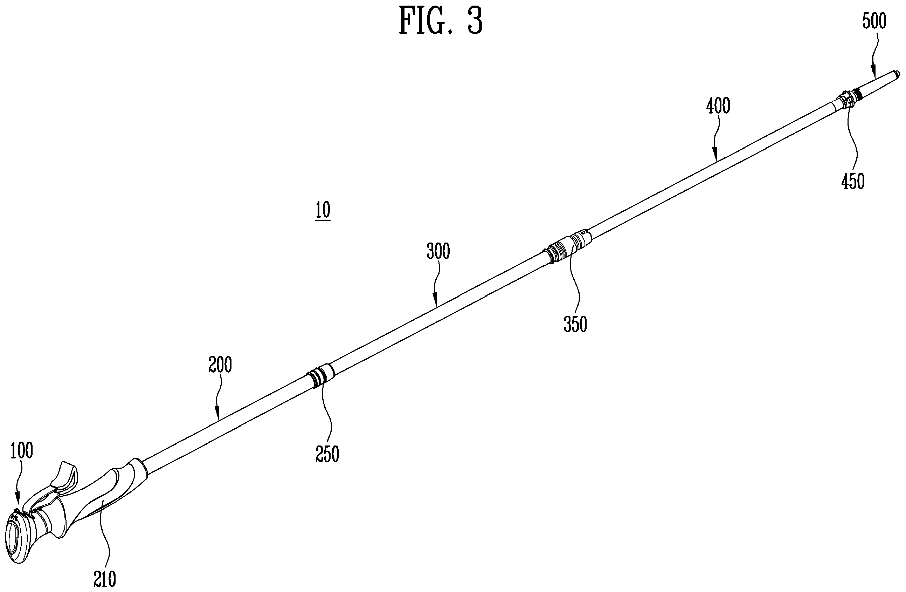

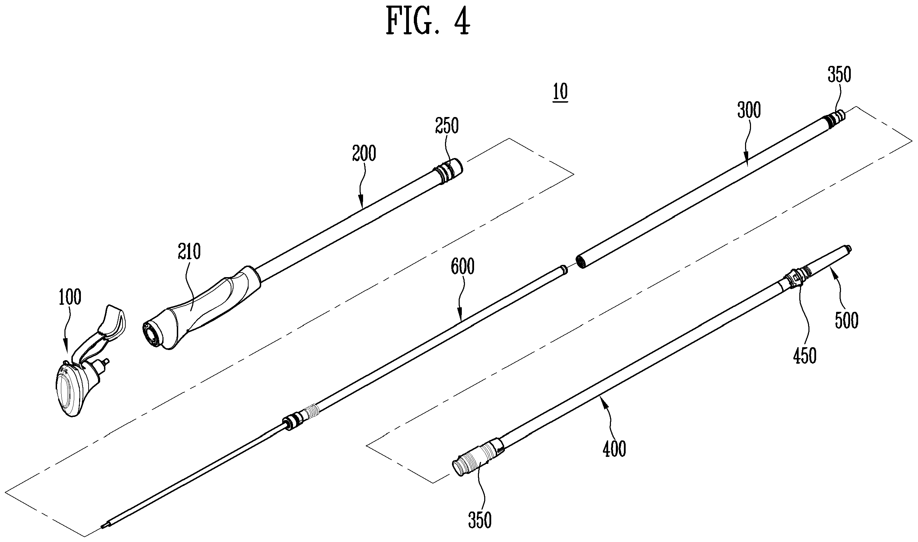

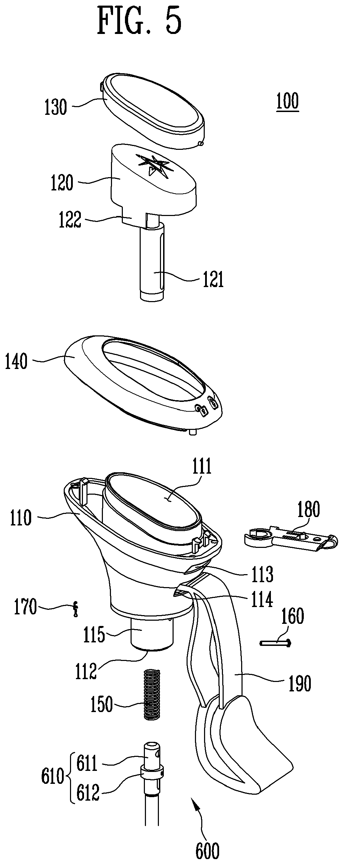

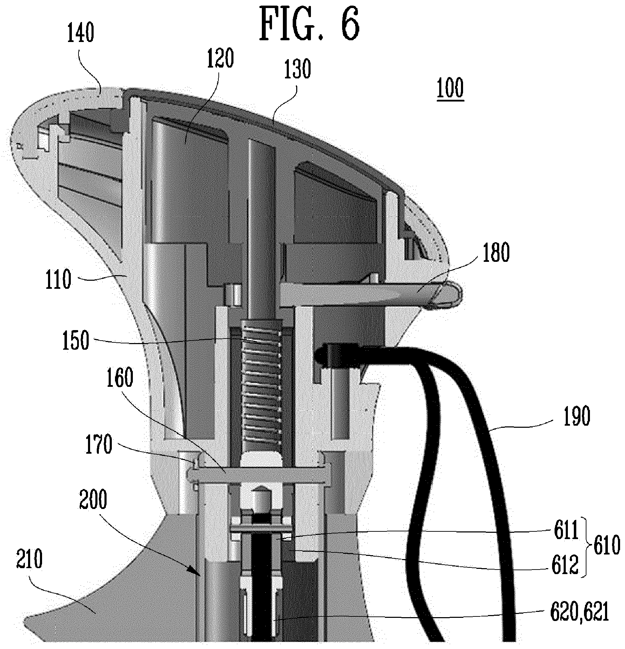

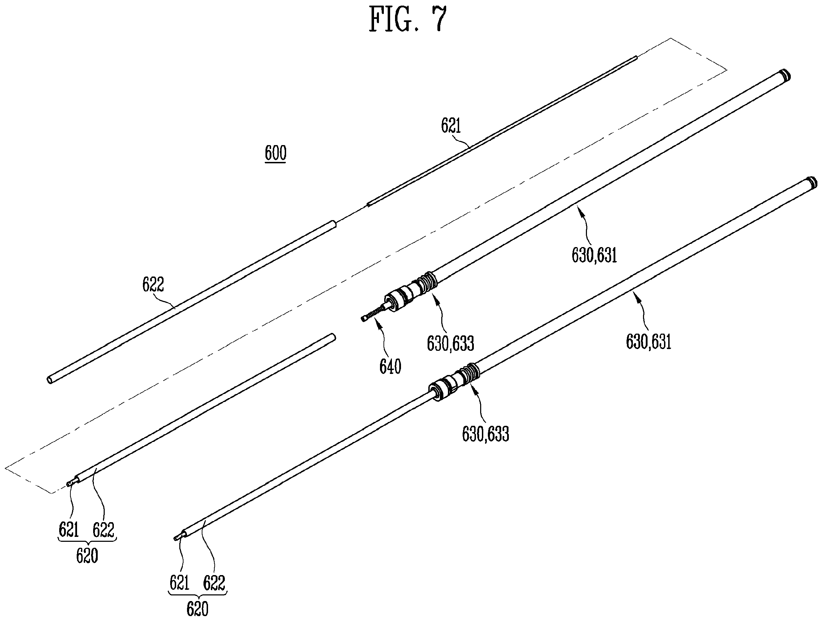

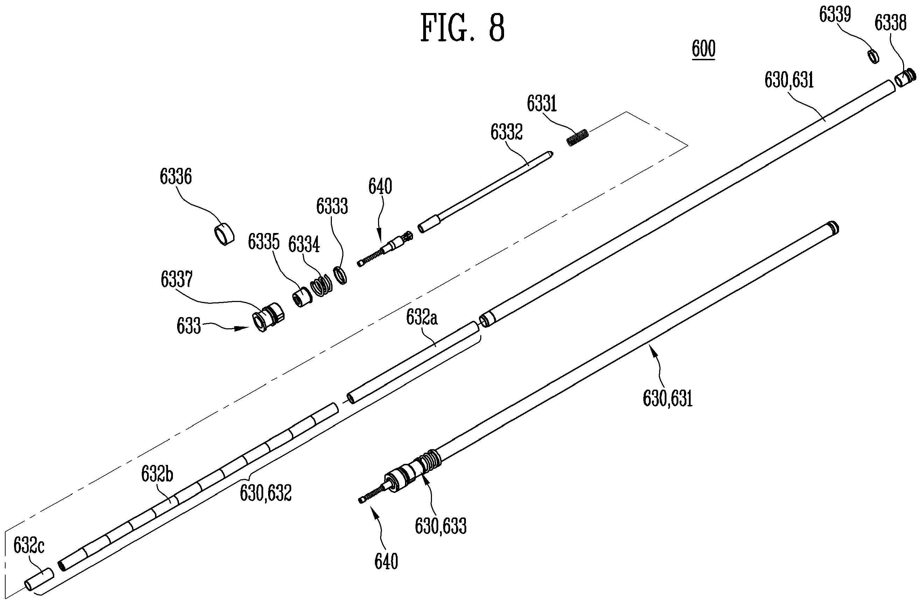

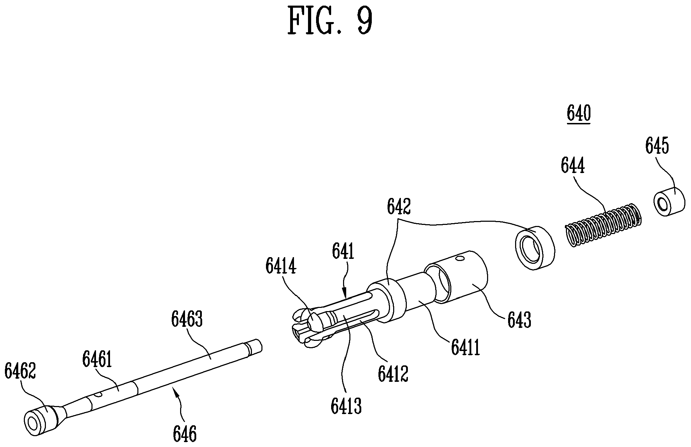

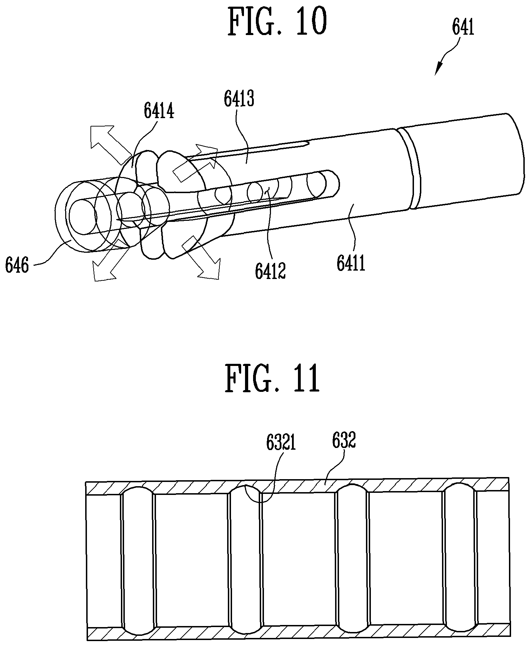

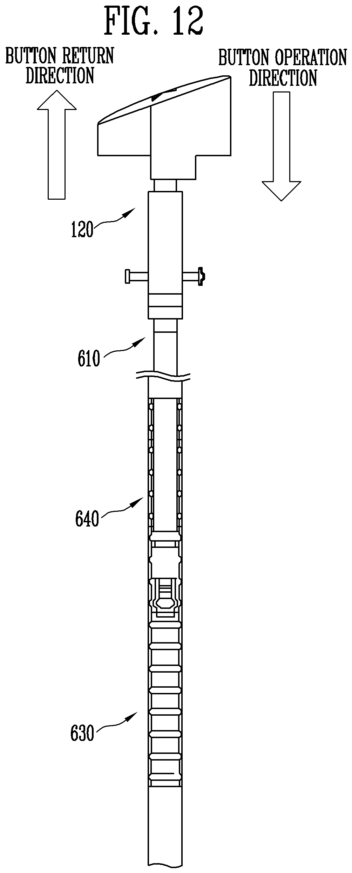

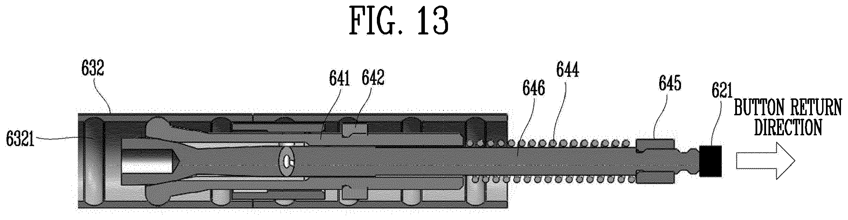

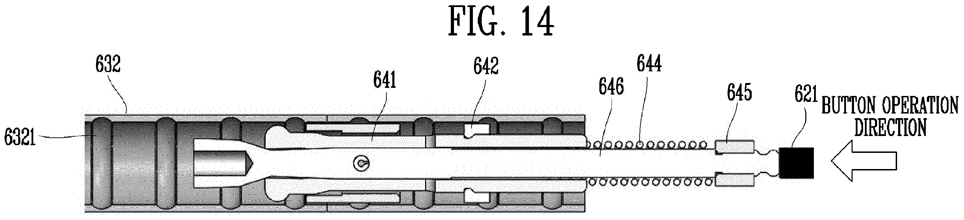

FIG. 2 is a perspective view illustrating an appearance when a length adjustment device is contracted in accordance with an embodiment of the present invention. FIG. 3 is a perspective view illustrating an appearance when the length adjustment device is expanded in accordance with the embodiment of the present invention. FIG. 4 is an exploded perspective view of the length adjustment device in accordance with the embodiment of the present invention. FIG. 5 is an exploded perspective view of a handle in accordance with the present invention. FIG. 6 is a sectional view of the handle in accordance with the present invention. FIG. 7 is a partial exploded perspective view of a length adjustment means in accordance with the present invention. FIG. 8 is another partial exploded perspective view of the length adjustment means in accordance with the present invention. FIG. 9 is an exploded perspective view of a clamp assembly of the length adjustment means in accordance with the present invention. FIG. 10 is a partial perspective view of the clamp assembly of the length adjustment means in accordance with the present invention. FIG. 11 is a partial sectional view of a spin pipe assembly of the length adjustment means in accordance with the present invention. FIG. 12 is a sectional view illustrating an operation of the length adjustment device in accordance with the embodiment of the present invention. FIG. 13 is a sectional view of the clamp assembly, illustrating a lock state of the length adjustment device in accordance with the embodiment of the present invention. FIG. 14 is a sectional view of the clamp assembly, illustrating an unlock state of the length adjustment device in accordance with the embodiment of the present invention.

As shown in FIGS. 2 to 4, the length adjustment device 10 in accordance with the embodiment of the present invention is one which can be conveniently used by freely adjusting the length thereof and easily fixing the adjusted length, and may include a handle 100, a main pole 200, a first expansion pole 300, a second expansion pole 400, an end tip 500, and a length adjustment means 600. Hereinafter, a case where the length adjustment device 10 is a tracking pole is described as an example. However, the present invention is not limited thereto, and it will be apparent that the length adjustment device 10 may be utilized as various uses for length adjustment, such as adjustment of the height of a bicycle saddle, adjustment of the height of a desk leg, and adjustment of the height of a handle of a suitcase.

In the length adjustment device 10, the first expansion pole 300 may be retracted/extracted into/from the main pole 200, and the second expansion pole 400 may be retracted/extracted into/from the first expansion pole 300, the first expansion pole 300 may be retracted into the main pole 200 in a state in which the second expansion pole 400 is retracted into the first expansion pole 300, so that the length adjustment device 10 can be kept contracted.

The handle 100 may be coupled to one end portion of the main pole 200, and be referred to as a manipulation part for manipulating the length adjustment means 600. The main pole 200 and the first expansion pole 300 may be coupled to each other by a first coupling member 250, the first expansion pole 300 and the second expansion pole 400 may be coupled to each other by a second coupling member 250, and the second expansion pole 400 and the end tip 500 may be coupled to each other by a third coupling member 350.

In the above, the first coupling member 250 may couple the other end portion of the main pole 200 to one end portion of the first expansion pole 300, and be configured such that the first expansion pole 300 is not separated from the main pole 200 when the first expansion pole 300 is retracted/extracted into/from the main pole 200.

The second coupling member 350 may couple the other end portion of the first expansion pole 300 to one end portion of the second expansion pole 400, and be configured to fix the second expansion pole 400 when the second expansion pole 400 is completely retracted or extracted into or from the first expansion pole 300.

The third coupling member 450 may be configured to fix the end tip 500 at the other end portion of the second expansion pole 400.

Each of the first coupling member 250, the second coupling member 350, and the third coupling member 450 is a coupling means, and it will be apparent that each of the first coupling member 250, the second coupling member 350, and the third coupling member 450 is not limited to that described above and may be variously configured.

The handle 100 may be coupled to the one end portion of the main pole 200, and operate the length adjustment means 600 through manipulation.

As shown in FIGS. 5 and 6, the handle 100 may include a head body 110, a push button 120, a head silicon cover 130, a head top cover 140, a button spring 150, a head fixing pin 160, an E-ring 170, a switch lock 180, and a webbing strap 190.

The head body 110 may be referred to as a main frame of the handle 100, and determine the entire shape of the handle 100. That is, the head body 110 may have an upper surface formed inclined toward a front lower side to facilitate grip of a user. Therefore, head body 110 may be manufactured in a shape serving a handle function of enabling the user to easily grip the handle 100.

The head body 110 may have an upper installation groove 111 formed at an upper portion thereof such that the push button 120 is inserted and installed in the upper installation groove 111. The head body 110 may have a lower installation groove 112 formed at a lower portion thereof such that one end portion of a start rod assembly 610 of the length adjustment means 600 is inserted into the lower installation groove 112. The head body 110 may have an extraction hole 113 formed at one side thereof such that one end portion of the switch lock 180 is extracted after the switch lock 180 is coupled to the head body 110. The head body 110 may have a webbing groove 114 formed at one side thereof such that a portion of the webbing strap 190 is inserted and coupled to the head body 110 through the webbing groove 114. In addition, a fastening part 115 may be formed at a lower portion of the head body 110 such that the one end portion of the main pole 200 is fastened to an outer circumferential surface of the fastening part 115. A coupling manner between the fastening part 115 and the main pole 200 may be variously configured. For example, the coupling manner may be a screw manner.

The push button 120 may be mounted in the upper installation groove 111 of the head body 110 to be assembled with the head body 110 by using the head fixing pin 160. The push button 120 may have an upper surface formed inclined toward a front lower side to correspond to the shape of the head body 110.

The push button 120 may have a push piece 121 and a lock piece 122, each which is formed to extend toward a lower side. The push piece 121 may be formed longer than the lock piece 122. When the user pushes the push button 120, the push piece 121 may apply a weight to the start rod assembly 610 of the length adjustment means 600, which is installed directly thereunder.

By a push operation of the push button 120, a weight is applied to the start rod assembly 610, the weight applied to the start rod assembly 610 is transferred to a clamp assembly 640 through an action rod assembly 620, a clamp rod 646 of the clamp assembly 640 is extracted from a main clamp 641, so that pressurization is released while the main clamp 641 pressurizing a spin pipe 632 of a spin pipe assembly 630 to the outside is contracted. Accordingly, the spin pipe 632 releases a lock state caused by the main clamp 641.

That is, a main function of the push button 120 may be releasing a lock of the spin pipe 632 which is always in the lock state caused by the main clamp 641. The spin pipe 632 of which the lock is released can be moved vertically, and the first expansion pole 300 along with the spin pipe 632 can be slid at the inside of the main pole 200. Thus, the first expansion pole 300 can be retracted/extracted into/from the main pole 200, thereby enabling length adjustment.

The head silicon cover 130 and the head top cover 140 constitute a cover for closing an upper portion of the handle 100 in a state in which the push button 120 is mounted at the head body 110.

The head silicon cover 130 may be assembled to the head body 110 by using an adhesive, and have a function a function of preventing penetration of water falling vertically or sprayed directly (vertically) from the top through an internal mechanism, a function of preventing a slip when the push button 120 is manipulated, and a function of guiding manipulation of the push button 120.

The head top cover 140 may fix the head silicon cover 130.

The button spring 150 may be inserted and installed around the push piece 121, to enable the push button 120 to be smoothly returned upwardly when an external pressure is released in a state in which the push button 120 is pushed. When the push button is returned by the button spring 150, the clamp rod 646 of the clamp assembly 640 is retracted into the main clamp 641 by the clamp spring 644. Thus, the main clamp 641 pressurizes the spin pipe 632 of the spin pipe assembly 630 to the outside while moving a circumferential direction, thereby becoming the lock state.

The head fixing pin 160 and the E-ring 170 allow the push button 120 to be assembled to the head body 110.

The switch lock 180 may be installed in the extraction hole 113 of the head body 110, and restrict push of the push button 120 or enable a push operation of the push button 120 through manipulation of the user. It will be apparent that the switch lock 180 may be variously implemented as a rotary type switch lock, a push type switch lock, and the like.

The webbing strap 190 may be inserted and coupled to the head body 110 through the webbing groove 114.

The one end portion of the main pole 200 may be fixedly coupled to the fastening part 115 of the handle 100, and the other end portion of the main pole 200 may be coupled to the first expansion pole 300 by the first coupling member 250. The start rod assembly 610 and the action rod assembly 620 of the length adjust means 600 may be installed at the inside of the main pole 200. A knob 210 may be provided at an outer circumferential surface of the one end portion of the main pole 200.

The one end portion of the first expansion pole 300 may be coupled to the other end portion of the main pole 200, and the other end of the first expansion pole 300 may be coupled to the second expansion pole 400 by the second coupling member 350. The first expansion pole 300 may be installed to be retracted/extracted into/from the main pole 200. The spin pipe assembly 630 and the clamp assembly 640 of the length adjustment means 600 may be installed at the inside of the first expansion pole 300.

The first expansion pole 300 along with the spin pipe assembly 630 may be configured to be retracted/extracted into/from the main pole 200. That is, when the spin pipe assembly 630 is in the lock state as the clamp assembly 640 pressurizes the spin pipe assembly 630 to the outside, the first expansion pole 300 is in a fixed state. On the contrary, when the spin pipe assembly 630 is in an unlock state as the pressurization of the clamp assembly 640 with respect to the spin pipe assembly 630 is released, the first expansion pole 300 is in a movable state.

The one end portion of the second expansion pole 400 may be coupled to the first expansion pole 300 by the second coupling member 350, and the other end portion of the second expansion pole 400 may be coupled to the end tip 500 by the third coupling member 450. The second expansion pole 400 may be installed to be retracted/extracted into/from the first expansion pole 300.

The end tip 500 may function to support the length adjustment device 10, and be coupled to the other end portion of the second expansion pole 400 by the third coupling member 450. The end tip 500 is a part to which a weight applied to the length adjustment device 10 is finally transferred, and it will be apparent that the end tip 500 may be formed in various structures capable of reducing impact caused by the weight.

The length adjust means 600 may be configured to enable detailed length adjustment of the first expansion pole 300 through manipulation of the push button 120 of the handle 100. The length adjustment means 600 may include the start rod assembly 610, the action rod assembly 620, the spin pipe assembly 630, and the clamp assembly 640.

Although will be described later, the start rod assembly 610 and the action rod assembly 620 may referred to as a weight transfer means for transferring a weight of the push button 120 to the clamp assembly 640.

In addition, the action road assembly 620 may be referred to as a key for restricting or releasing the spin pipe assembly 630.

In addition, when assuming that the spin pipe assembly 630 is referred to as a run shaft since the spin pipe assembly 630 is movable together with the first expansion pole 300, the start rod assembly 610, the action rod assembly 620, and the clamp assembly 640 may be referred to as a fixed shaft for guiding movement of the run shaft.

The start rod assembly 610 may be installed throughout a boundary between the handle 100 and the main pole 200. When the push button 120 is pushed, the start rod assembly may transfer a weight of the push button 120 to the action road assembly 620 such that the spin pipe assembly 630 is in the unlock state by the clamp assembly 640. The start rod assembly 610 may include a start rod 611 and a start rod column 612.

One end portion of the start rod 611 may be inserted and installed in the lower installation groove 112 of the head body 110, and the other end portion of the start rod 611 may extend up to the inside of the main pole 200. The start rod 611 may be in contact with the button spring 150 at the inside of the push piece 121 in a state in which the one end portion of the start rod 611 is inserted into the push piece 121, and the other end portion of the start rod 611 may be connected to the action rod assembly 620.

The start rod column 612 may be installed at a portion of an outer circumferential surface of the start rod 611 to be in contact with the push piece of the push button 120. When the push button 120 is pushed, the start rod column 612 enables a weight of the push button 120 to be transferred to the action rod assembly 620 through the start rod 611.

The action rod assembly 620 may be installed at the inside of the main pole 200. When the push button 120 is pushed, the action rod assembly 620 may transfer a weight transferred from the start rod assembly 610 to the clamp assembly 640 such that the spin pipe assembly 630 is in the unlock state by the clamp assembly 640. The action rod assembly 620 may include an action rod 621 and an action rod cylinder pipe 622.

The action rod 621 may be installed at the inside of the main pole 200. One end portion of the action rod 621 may be connected to the other end portion of the start rod 611, and the other end portion of the action rod 621 may be connected to one end portion of the clamp rod 646 of the clamp assembly 640. The action rod 621 may transfer a weight transferred from the start rod assembly 610 to the clamp assembly 640 such that the clamp assembly 640 is in the unlock state.

The action rod cylinder pipe 622 may be installed at the inside of the main pole 200 to guide the action rod 621 when the action rod 621 performs a sliding motion. That is, the action rod 621 may transfer a weight transferred from the start rod assembly 610 to the clamp assembly 640 while performing the sliding motion at the inside of the action rod cylinder pipe 622. The action rod cylinder pipe 622 guides the action rod 621 such that the weight is not distributed but can be transferred in a vertical direction.

The spin pipe assembly 630 may be fixedly installed at the inside of the first expansion pole 300, and maintain the lock state or the unlock state by the clamp assembly 640. When the spin pipe assembly 630 is in the unlock state by the clamp assembly 640 due to a push operation of the push button 120, the spin pipe assembly 630 along with the first expansion pole 300 may move vertically. Accordingly, the first expansion pole 300 is retracted/extracted into/from the main pole 200, thereby adjusting the entire length.

The spin pipe assembly 630 may include a spin cover pipe 631, the spin pipe 632, and a spin pipe member 633. The spin pipe member 633 may be configured with a spin pipe spring 6331, a spring guide rod 6332, a stopper spring bush 6333, a cushion spring 6334, a first spin pipe column 6335, a piston head ring 6336, a second spin pipe column 6337, a piston head 6338, a spin pipe column ring 6339, and the like. The spin pipe member 633 may function to allow the spin cover pipe 631 to be fixed to the first expansion pole 300, to allow the spin pipe 632 not to be separated from the spin cover pipe 631, or to pressurize the sip pipe 632.

The spin cover pipe 631 may be fixedly installed at the inside of the first expansion pole 300, and accommodate the spin pipe 632.

The stopper spring bush 6333, the cushion spring 6334, the first spin pipe column 6335, the piston head ring 6336, and the second spin pipe column 6337 of the spin pipe member 633 are assembled at an outer circumferential surface of one end portion of the spin cover pipe 631, and the spin cover pipe 631 is installed at the inside of the first expansion pole 300 in a state in which the spin pipe member 633 is assembled as described above. Therefore, the spin cover pipe 631 may be fixed to the inside of the first expansion pole 300.

Also, the other end portion of the spin cover pipe 631 is blocked by the piston head 6338 and the spin pipe column ring 6339 of the spin pipe member 633 such that the spin pipe 632 accommodated in the inside of the spin cover pipe 631 is not separated.

Also, the spin pipe spring 6331 and the spring guide rod 6332 of the spin pipe member 633 is assembled and installed at the inside of the spin cover pipe 631 to pressurize between adjacent spin pipes 632 accommodated in the spin cover pipe 631. Thus, a gap can be prevented from being generated between the spin pipes 632.

The spin pipe 632 is accommodated in the spin cover pipe 631, and have round-shaped grooves 6321 machined at a constant pitch at an inner circumferential surface thereof as shown in FIG. 11.

The groove 6321 may be formed such that a projection 6414 formed in the main clamp 641 can be stuck therein. A length adjustment range may be freely changed and modified according to the pitch of the grooves 6321 machined at the inside of the spin pipe 632 and the length of the spin pipe 632.

The above-described spin pipe 632 is inserted into the spin cover pipe 631 through the one end portion of the spin cover pipe 631, and be provided in plurality.

The plurality of spin pipes 632 are be manufactured as a long spin pipe 632a which is relatively long, a plurality of short spin pipes 632b which are relatively short, and a last spin pipe 632c which is similar to the short spin pipe 632b. The plurality of spin pipes 632 inserted into the spin cover pipe 631 through the one end portion of the spin cover pipe 631 are inserted in a sequence of the long spin pipe 632a, the short spin pipes 632b, and the last spin pipe 632c.

In the above, the reason why the plurality of spin pipes 632 are manufactured as the long spin pipe 632a, the short spin pipes 632b, and the last spin pipe 632c is to set a position at which the projection 6414 of the main clamp 641 is engaged with the groove 6321 at the inside of the spin pipe 632 when the length adjustment device 10 is completely expanded or contracted. Therefore, the length of the long spin pipe 632a or the last spin pipe 632c may be changed so as to modify an expansion degree and a contraction degree.

When a weight applied by a push operation of the push button 120 is transferred to the clamp assembly 640 through the start rod assembly 610 and the action rod assembly 620, the clamp assembly 640 enables length adjustment by allowing the lock state of the length adjustment device 10 to be released.

The clamp assembly 640 may be installed through a boundary between the main pole 200 and the first expansion pole 300, and include the main clamp 641, a clamp stopper nut 642, a clamp slider bush 643, and the clamp spring 644.

The main clamp 641 may be installed at the inside of the spin pipe 632. The main clamp 641 may restrict the spin pipe 632 such that the length adjustment device 10 maintains the lock state, or release the spin pipe 632 such that the length adjustment device 10 is in the unlock state. Thus, the length adjustment is possible as the first expansion pole 300 is retracted/extracted into/from the main pole 200.

The main clamp 641 may have the entire shape which is a cylindrical shape having a hollow. The main clamp 641 may include a plurality of cut grooves 6412 formed in a length direction from one end portion of a clamp body 6411, and a plurality of fingers 6413 formed by the plurality of cut grooves 6412. The projection 6414 may be provided outwardly at an end portion of each of the plurality of fingers 6413.

Four fingers 6413 may be formed by machining the cut groove in a "+" shape, and form inclined planes such that a head part 6462 of the clamp rod 646 can be easily retracted/extracted. The diameter formed by the inclined planes is large at the outside and becomes smaller as becoming closer to the inside.

When the head part 6462 of the clamp rod 646 is retracted, the fingers 6413 move in the circumferential direction such that the projections 6414 are stuck in the groove 6321. When the head part 6462 of the clamp rod 646 is extracted, the fingers 6413 are contracted to an original state such that the projections 6414 are escaped from the groove 6321.

The projection 6414 may be formed at an end portion of the finger 6413, and have a shape corresponding to the groove 6321 of the spin pipe 632.

The clamp stopper nut 642 may be formed at a portion of an outer circumferential surface of the clamp body 641, and allow the main clamp 641 not to be separated from the spin cover pipe 631 of the spin pipe assembly 630.

The clamp slider bush 643 may be formed at a portion of the outer circumferential surface of the clamp body 641, and enable the main clamp 641 to be stably slid at the inside of the spin pipe 632.

The clamp spring 644 may be inserted and installed around a tail part 6463 of the clamp rod 646 in a state in which the clamp rod 646 is assembled to the main clamp 641.

One end portion of the clamp spring 644 is fixed to the main clamp 641, and the other end portion of the clamp spring 644 is fixed by a clamp part nut 645, so that the head part 6462 of the clamp rod 646 always maintains a state in which the head part 6462 is retracted into the inside of the fingers 6413 of the main clamp 641. The clamp spring 644 is contracted by a push operation of the push button 120, but is returned to the original state at the moment at which the push operation of the push button 120 is released. Accordingly, the length adjustment device 10 ordinarily maintains the lock state by means of the clamp spring 644.

The clamp part nut 645 may be inserted and installed around the tail part 6463 of the clamp rod 646, and fix the other end part of clamp spring 644 in a state in which the clamp rod 646 is assembled to the main clamp 641.

The clamp rod 646 may be inserted and installed in the main clamp 641 through one end portion of the main clamp 641. When a weight applied by a push operation of the push button 120 is transferred through the start rod assembly 610 and the action rod assembly 620, the clamp rod 646 may be extracted from the main clamp 641 by the weight.

The clamp rod 646 may serve as a key for allowing the main clamp 641 to restrict or release the spin pipe 632, and be divided into a body part 6461, the head part 6462, and the tail part 6463.

The body part 6461 has a diameter corresponding to that of the hollow of the main clamp 641, and may have a taper shape of which diameter becomes smaller as becoming closer to the head part 6462.

A tapered portion of the body part 6461 is a portion at which the fingers 6413 are seated while being contracted when the head part 6462 is extracted from the fingers 6413 (in the unlock state). The tapered portion of the body part 6461 allows the projections 6414 not to be interfered with the spin pipe 632 when the fingers 6413 are seated, so that the spin pipe 632 can freely move from the main clamp 641.

The head part 6462 may have a diameter greater than that of the body part 6461, and allow the fingers 6413 to move in the circumferential direction while being retracted into the inside of the fingers 6413, so that the projections 6414 are stuck in the groove 6321 of the spin pipe 632. The head part 6462 may have a taper shape in which a portion in contact with an entrance of the fingers 6413 has a diameter smaller than that of another portion. Accordingly, the head part 6462 is easily retracted/extracted into/from the inside of the fingers 6413.

The tail part 6463 may have a diameter equal to or smaller than that of the body part 6461, and be inserted into the clamp spring 644. The tail part 6463 may have a groove (reference numeral not shown) formed therearound such that the clamp part nut 645 for fixing the clamp spring 644 can be installed in the groove.

The tail part 6463 may be connected to the action rod 621 of the action rod assembly 620, and receive a weight applied by a push operation of the push button 120, which is transferred from the action rod 621.

As described above, in the length adjustment device 10 in accordance with the embodiment of the present invention, the start rod assembly 610, the action rod assembly 620, and the clamp assembly 640 are connected in a straight line to serve as a fixed shaft, and the spin pipe assembly 630 along with the first expansion pole 30 serve as a run shaft. When the spin pipe assembly 630 is in the unlock state by the clamp assembly 640 according to a push operation of the push button 120, the spin pipe assembly 630 vertically moves together with the first expansion pole 300 along the fixed shaft. Accordingly, the first expansion pole 300 is retracted/extracted into/from the main pole 200, thereby adjusting the entire length.

An operation of the length adjustment device 10 in accordance with the embodiment of the present invention will be described as follows.

In a state in which the length adjustment device 10 is kept contracted, the second expansion pole 400 accommodated in the first expansion pole 300 is first pulled downwardly to be extracted and then fixed by using the second coupling member 350.

In a state in which the push button 120 is not pushed, the main clamp 641 pressurizes the spin pipe 632 to the outside while maintaining a state in which the clamp rod 646 is inserted into the main clamp 641 by means of a force of the clamp spring 644. Accordingly, the length adjustment device 10 ordinarily maintains the lock state.

When a weight of the push button 120 is transferred to the clamp assembly 640 through the start rod assembly 610 and the action rod assembly 620 as the push button 120 is pushed, the pressurization of the main clamp 641 with respect to the spin pipe 632 is released, so that the main clamp 641 which is ordinarily in the lock state is in the unlock state by the clamp spring 644 and the clamp rod 646. In the unlock state, the first expansion pole 300 is extracted from the main pole 200, thereby expanding the length adjustment device 10.

When it is determined that the length of the length adjustment device 10 has been adjusted such that the user can conveniently use the length adjustment device 10, a weight with which the user pushes the push button 120 is released. Then, a weight applied to the start rod 611 of the start rod assembly 610, the action rod 621 of the action rod assembly 620, and the clamp rod 646 of the clamp assembly 640 is also released while the push button 120 is returned upwardly by the help of the button spring 150. Accordingly, the clamp rod 646, the action rod 621, and the start rod 611 are pulled and lifted upwardly by a force by which the clamp spring 644 is returned. While the clamp rod 646 is retracted into the main clamp 641 by the force by which the clamp spring 644 is returned, the main clamp 641 again pressurizes the spin pipe 632, so that the first expansion pole 300 is no longer pulled or expanded even when the first expansion pole 300 is pulled or when a force is applied to the first expansion pole 300.

In this state, the pushing of the push button 120 is restricted by manipulating the switch lock 180, so that the user can safely use the length adjustment device 10.

In the above, a case where the length adjustment device 10 is expanded has been described. However, a case where the length adjustment device 10 is contracted is identical to the above-described operation, except a direction in which the first expansion pole 300 is retracted into the main pole 200. Therefore, a description of the case where the length adjustment device 10 is contracted will be omitted.

As described above, in the length adjustment device 10 in accordance with the present invention, the length to a degree which the user wants can be freely adjusted and the fixing of the adjusted length can be easily made, by locking or unlocking the clamp assembly 640. In addition, detailed length adjustment of the first expansion pole 300 is possible, and lock power is increased. In addition, length adjustment is smoothly and flexibly operated with respect to a ground, and the push button 120 is arbitrarily pushed while the length adjustment device 10 is kept or used. In addition, the button spring 150, the clamp spring 644, and the like are installed, so that the length adjustment can be smoothly and gently operated. In addition, the length can be easily changed only through manipulation of the push button 120. In addition, after the length adjustment device 10 is contracted to a degree which the user wants, the contracted length can be easily fixed with a small force, which is convenient. In addition, the user can rapidly manipulate the length adjustment device 10 under various use environments.

Although the present invention has been described based on the embodiments as described above, the embodiments are only illustrative and are not intended to limit the present invention. A person having ordinary skill in the art to which the present invention pertains may understand that various combination or modifications and applications not illustrated in the embodiments are possible without departing from the intrinsic technical contents of the present embodiment. Accordingly, technical contents related to modifications and applications that may be easily deduced from the embodiments of the present invention should be construed as being included in the present invention, as long as they fall within the scope of the appended claims.

## Claims

1. A length adjustment device (10) comprising:
a handle (100) including a push button (120);
a main pole (200) coupled to the handle (100);
an expansion pole (300) retracted/extracted into/from the main pole (200); and
a length adjustment means (600) enabling the expansion pole (300) to be retracted/extracted into/from the main pole (200) through manipulation of the push button (120), thereby adjusting the entire length,
wherein the length adjustment means (600) includes:
a weight transfer means (610, 620) installed at the inside of the main pole (200), the weight transfer means (610, 620) transferring a weight of the push button (120);
a spin pipe assembly (630) fixedly installed at the inside of the expansion pole (300);
wherein the spin pipe assembly (630) includes:
a spin cover pipe (631) fixedly installed at the inside of the expansion pole (300); and
a plurality of spin pipes (632) accommodated in the spin cover pipe (631), the plurality of spin pipes (632) having round-shaped grooves (6321) machined at a constant pitch at an inner circumferential surface thereof, and
wherein the plurality of spin pipes (632) are configured as a long spin pipe (632a) which is relatively long, a plurality of short spin pipes (632b) which are relatively short compared to the long spin pipe (632a), and a last spin pipe (632c) which is similar to the short spin pipe (632b), and are inserted into the spin cover pipe (631) through one end portion of the spin cover pipe (631) in a sequence of the long spin pipe (632a), the short spin pipes (632b), and the last spin pipe (632c); and
a clamp assembly (640) installed throughout a boundary between the main pole (200) and the expansion pole (300), the clamp assembly (640) allowing the spin pipe assembly (630) to maintain a lock state or an unlock state by pressurizing the spin pipe assembly (630) to the outside or by releasing the pressurization.

2. The length adjustment device (10) of claim 1, wherein, when the spin pipe assembly (630) maintains the lock state by the clamp assembly (640) and then is in the unlock state by a push operation of the push button (120), the spin pipe assembly (630) vertically moves together with the expansion pole (300) such that the expansion pole (300) is retracted/extracted into/from the main pole (200) .

3. The length adjustment device (10) of claim 1, wherein the clamp assembly (640) includes:
a main clamp (641) installed at the inside of the spin pipe (632), the main clamp (641) allowing the spin pipe (632) to maintain the lock state by restricting the spin pipe (632) or allowing the spin pipe (632) to maintain the unlock state by releasing the spin pipe (632);
a clamp rod (646) inserted and installed in the main clamp (641), the clamp rod (646) being connected to the weight transfer means (610, 620) to be retracted from the main clamp (641) by receiving a weight caused by a push operation of the push button (120); and
a clamp spring (644) allowing the clamp rod (646) to maintain a state in which the clamp rod (646) is retracted into the main clamp (641), when the weight of the push button (120) is released.

4. The length adjustment device (10) of claim 3, wherein the main clamp (641) has the entire shape which is a cylindrical shape having a hollow, and includes a plurality of cut grooves (6412) formed in a length direction from one end portion of a clamp body and a plurality of fingers (6413) formed by the plurality of cut grooves (6412), wherein a projection (6414) is provided outwardly at an end portion of each of the plurality of fingers (6413).

5. The length adjustment device (10) of claim 4, wherein the clamp rod (646) includes:
a body part (6461) formed to have a diameter corresponding to that of the hollow of the main clamp (641);
a head part (6462) having a diameter greater than that of the body part (6461), the head part (6462) allowing the fingers (6413) to move in a circumferential direction while being retracted into the inside of the fingers (6413), so that the projections (6414) are stuck in the groove (6321); and
a tail part (6463) having the clamp spring (644) inserted therearound, the tail part (6463) being connected to the weight transfer means (610, 620).

6. The length adjustment device (10) of claim 5, wherein the body part (6461) has a taper shape of which diameter becomes smaller as becoming closer to the head part (6462), and
wherein a tapered portion of the body part (6461) is a portion at which the fingers (6413) are seated while being contracted when the head part (6462) is extracted from the fingers (6413).

7. The length adjustment device (10) of claim 1, wherein the weight transfer means (610, 620) includes:
a start rod assembly (610) installed throughout a boundary between the handle (100) and the main pole (200), the start rod assembly (610) being connected to the push button (120); and
an action rod assembly (620) installed at the inside of the main pole (200), the action rod assembly (620) connecting the start rod assembly (610) and the clamp assembly (640) to each other.

8. The length adjustment device (10) of claim 7, wherein the start rod assembly (610), the action rod assembly (620), and the clamp assembly (640) are connected in a straight line to serve as a fixed shaft,
wherein the spin pipe assembly (630) serve as a run shaft, and
wherein, when the spin pipe assembly (630) is in the unlock state by the clamp assembly (640) according to a push operation of the push button (120), the spin pipe assembly (630) vertically moves together with the expansion pole (300) along the fixed shaft, so that the expansion pole (300) is retracted/extracted into/from the main pole (200) .

## Patentansprüche

1. Längenanpassungsvorrichtung (10), umfassend:
einen Griff (100), der einen Drückknopf (120) enthält;
eine Hauptstange (200), die an den Griff (100) gekoppelt ist;
eine Expansionsstange (300), die in die/aus der Hauptstange (200) eingezogen/herausgezogen ist; und
ein Längenanpassungsmittel (600), das es erlaubt, die Expansionsstange (300) durch Manipulation des Drückknopfes (120) in die/aus der Hauptstange (200) einzuziehen/herauszuziehen und dadurch die gesamte Länge anzupassen,
wobei das Längenanpassungsmittel (600) enthält:
ein Gewichtsübertragungsmittel (610, 620), das an der Innenseite der Hauptstange (200) installiert ist, wobei das Gewichtsübertragungsmittel (610, 620) ein Gewicht des Drückknopfes (120) überträgt;
eine Drehrohranordnung (630), die fest an der Innenseite der Expansionsstange (300) installiert ist;
wobei die Drehrohranordnung (630) enthält:
ein Drehabdeckungsrohr (631), das fest an der Innenseite der Expansionsstange (300) installiert ist; und
eine Mehrzahl von Drehrohren (632), die in dem Drehabdeckungsrohr (631) untergebracht sind, wobei die Mehrzahl von Drehrohren (632) rund geformte Nuten (6321) aufweist, die mit einem konstanten Abstand an einer inneren Umfangsoberfläche davon hergestellt sind, und
wobei die Mehrzahl von Drehrohren (632) konfiguriert sind als ein langes Drehrohr (632a), das relativ lang ist, eine Mehrzahl von kurzen Drehrohren (632b), die im Vergleich zu dem langen Drehrohr (632a) relativ kurz sind, und ein letztes Drehrohr (632c), das dem kurzen Drehrohr (632b) ähnlich ist, und die in das Drehabdeckungsrohr (631) durch einen Endbereich des Drehabdeckungsrohrs (631) in einer Reihenfolge des langen Drehrohrs (632a), der kurzen Drehrohre (632b) und des letzten Drehrohrs (632c) eingesetzt sind; und
eine Klammeranordnung (640), die entlang einer Grenze zwischen der Hauptstange (200) und der Expansionsstange (300) installiert ist, wobei die Klammeranordnung (640) der Drehrohranordnung (630) erlaubt, einen Verriegelungszustand oder einen Entriegelungszustand aufrechtzuerhalten, indem sie die Drehrohranordnung (630) nach außen unter Druck setzt oder die Druckbeaufschlagung löst.

2. Längenanpassungsvorrichtung (10) nach Anspruch 1, wobei, wenn die Drehrohranordnung (630) den Verriegelungszustand durch die Klammeranordnung (640) aufrechterhält und dann durch eine Drückbetätigung des Drückknopfes (120) in dem Entriegelungszustand ist, sich die Drehrohranordnung (630) zusammen mit der Expansionsstange (300) vertikal bewegt, derart, dass die Expansionsstange (300) in die/aus der Hauptstange (200) eingezogen/herausgezogen wird.

3. Längenanpassungsvorrichtung (10) nach Anspruch 1, wobei die Klammeranordnung (640) enthält:
eine Hauptklammer (641), die an der Innenseite des Drehrohrs (632) installiert ist, wobei die Hauptklammer (641) dem Drehrohr (632) erlaubt, den Verriegelungszustand beizubehalten, indem sie das Drehrohr (632) einschränkt, oder dem Drehrohr (632) erlaubt, den Entriegelungszustand durch Lösen des Drehrohrs (632) beizubehalten;
einen Klammerstab (646), der in die Hauptklammer (641) eingesetzt und darin installiert ist, wobei der Klammerstab (646) mit den Gewichtsübertragungsmitteln (610, 620) verbunden ist, um von der Hauptklammer (641) eingezogen zu werden, indem sie ein Gewicht aufnimmt, das durch eine Drückbetätigung des Drückknopfs (120) verursacht wird; und
eine Klammerfeder (644), die es dem Klammerstab (646) erlaubt, einen Zustand aufrechtzuerhalten, in dem der Klammerstab (646) in die Hauptklammer (641) zurückgezogen ist, wenn das Gewicht des Drückknopfes (120) gelöst wird.

4. Längenanpassungsvorrichtung (10) nach Anspruch 3, wobei die Hauptklammer (641) die gesamte Form einer zylindrischen Form mit einem Hohlraum aufweist und eine Mehrzahl von geschnittenen Nuten (6412), die in einer Längsrichtung von einem Endbereich eines Klammerkörpers gebildet sind, und eine Mehrzahl von Fingern (6413), die durch die Mehrzahl von geschnittenen Nuten (6412) gebildet sind, aufweist, wobei ein Vorsprung (6414) an einem Endbereich von jedem der Mehrzahl von Fingern (6413) nach außen vorgesehen ist.

5. Längenanpassungsvorrichtung (10) nach Anspruch 4, wobei der Klammerstab (646) enthält:
ein Körperteil (6461), das so gebildet ist, dass es einen Durchmesser aufweist, der demjenigen des Hohlraums der Hauptklammer (641) entspricht;
ein Kopfteil (6462), das einen größeren Durchmesser aufweist als das Körperteil (6461), wobei das Kopfteil (6462) den Fingern (6413) erlaubt, sich in einer Umfangsrichtung zu bewegen, während es in das Innere der Finger (6413) eingezogen ist, so dass die Vorsprünge (6414) in der Nut (6321) stecken; und
ein Hinterteil (6463), das die darum herum eingesetzte Klammerfeder (644) aufweist, wobei das Hinterteil (6463) mit den Gewichtsübertragungsmitteln (610, 620) verbunden ist.

6. Längenanpassungsvorrichtung (10) nach Anspruch 5, wobei das Körperteil (6461) eine sich verjüngende Form aufweist, deren Durchmesser mit zunehmender Annäherung an das Kopfteil (6462) kleiner wird, und
wobei ein sich verjüngender Bereich des Körperteils (6461) ein Bereich ist, an dem die Finger (6413) sitzen, während sie zusammengezogen werden, wenn das Kopfteil (6462) aus den Fingern (6413) herausgezogen wird.

7. Längenanpassungsvorrichtung (10) nach Anspruch 1, wobei das Gewichtsübertragungsmittel (610, 620) enthält:
eine Startstabanordnung (610), die entlang einer Grenze zwischen dem Griff (100) und der Hauptstange (200) installiert ist, wobei die Startstabanordnung (610) mit dem Drückknopf (120) verbunden ist; und
eine Aktionsstabanordnung (620), die an der Innenseite der Hauptstange (200) installiert ist, wobei die Aktionsstabanordnung (620) die Startstabanordnung (610) und die Klammeranordnung (640) miteinander verbindet.

8. Längenanpassungsvorrichtung (10) nach Anspruch 7, wobei die Startstabanordnung (610), die Aktionsstabanordnung (620) und die Klammeranordnung (640) in einer geraden Linie verbunden sind, um als fixierter Schaft zu dienen,
wobei die Drehrohranordnung (630) als Laufschaft dient, und
wobei, wenn die Drehrohranordnung (630) durch die Klammeranordnung (640) gemäß einer Drückbetätigung des Drückknopfes (120) in dem Entriegelungszustand ist, sich die Drehrohranordnung (630) zusammen mit der Expansionsstange (300) entlang des fixierten Schafts vertikal bewegt, so dass die Expansionsstange (300) in die/aus der Hauptstange (200) eingezogen/herausgezogen wird.

## Revendications

1. Un dispositif (10) de réglage de longueur comprenant :
une poignée (100) comprenant un bouton poussoir (120) ;
un bâton principal (200) relié à la poignée (100) ;
un bâton d'expansion (300) rétracté dans le / extrait du bâton principal (200) ; et
un moyen (600) de réglage de longueur permettant au bâton d'expansion (300) d'être rétracté dans le / extrait du bâton principal (200) par manipulation du bouton poussoir (120), réglant ainsi toute la longueur,
les moyens de réglage de longueur (600) comprenant :
un moyen de transfert de poids (610, 620) installé à l'intérieur du bâton principal (200), le moyen de transfert de poids (610, 620) transférant un poids du bouton poussoir (120) ;
un ensemble (630) de tubes tournants installé de manière fixe à l'intérieur du bâton d'expansion (300) ;
l'ensemble (630) de tubes tournants comprenant :
un tube de recouvrement tournant (631) installé de manière fixe à l'intérieur du bâton d'expansion (300) ; et
une pluralité de tubes tournants (632) logés dans le tube de recouvrement tournant (631), les tubes de la pluralité de tubes tournants (632) ayant des rainures (6321) de forme arrondie usinées selon un pas constant sur une surface circonférentielle intérieure d'eux-mêmes, et
les tubes de la pluralité de tubes tournants (632) étant sous la forme d'un tube tournant long (632a) qui est relativement long, une pluralité de tubes tournant courts (632b) qui sont relativement courts par rapport au tube tournant long (632a), et un dernier tube tournant (632c) qui est similaire au tube tournant court (632b), et sont insérés dans le tube de recouvrement tournant (631) à travers une partie d'extrémité du tube de recouvrement tournant (631), selon la séquence : tube tournant long (632a), tubes tournant courts (632b) et dernier tube tournant (632c) ; et
un ensemble de serrage (640) installé tout au long d'une limite entre le bâton principal (200) et le bâton d'expansion (300), l'ensemble de serrage (640) permettant à l'ensemble (630) de tubes tournants de maintenir un état verrouillé ou un état déverrouillé en exerçant une pression sur l'ensemble de tubes tournants (630) vers l'extérieur ou en relâchant la pression.

2. Le dispositif (10) de réglage de longueur selon la revendication 1, dans lequel, lorsque l'ensemble (630) de tubes tournants maintient l'état verrouillé par l'ensemble de serrage (640) et est ensuite dans l'état déverrouillé par une opération de poussée du bouton poussoir (120), l'ensemble (630) de tubes tournants se déplace verticalement avec le bâton d'expansion (300) de sorte que le bâton d'expansion (300) est rétracté dans le / extrait du bâton principal (200).

3. Le dispositif (10) de réglage de longueur selon la revendication 1, dans lequel l'ensemble de serrage (640) comprend :
une pince principale (641) installée à l'intérieur du tube tournant (632), la pince principale (641) permettant au tube tournant (632) de maintenir l'état verrouillé en restreignant le tube tournant (632) ou en permettant au tube tournant (632) de maintenir l'état déverrouillé en relâchant le tube tournant (632) ;
une tige de serrage (646) insérée et installée dans la pince principale (641), la tige de serrage (646) étant reliée aux moyens de transfert de poids (610, 620) de façon à être rétractée de la pince principale (641) en recevant un poids amené par une opération de poussée du bouton poussoir (120) ; et
un ressort de serrage (644) permettant à la tige de serrage (646) de maintenir un état dans lequel la tige de serrage (646) est rétractée dans la pince principale (641), lorsque le poids du bouton poussoir (120) est relâché.

4. Le dispositif (10) de réglage de longueur selon la revendication 3, dans lequel la pince principale (641) a entièrement une forme qui est une forme cylindrique ayant un creux, et comprend une pluralité de rainures découpées (6412) formées dans une direction longitudinale à partir d'une partie d'extrémité d'un corps de pince et une pluralité de doigts (6413) formés par la pluralité de rainures découpées (6412), une saillie (6414) étant prévue vers l'extérieur au niveau d'une partie d'extrémité de chaque doigt de la pluralité de doigts (6413).

5. Le dispositif (10) de réglage de longueur selon la revendication 4, dans lequel la tige de serrage (646) comprend :
une partie de corps (6461) formée de façon à avoir un diamètre correspondant à celui du creux de la pince principale (641) ;
une partie tête (6462) ayant un diamètre supérieur à celui de la partie corps (6461), la partie tête (6462) permettant aux doigts (6413) de se déplacer dans une direction circonférentielle tout en étant rétractés à l'intérieur des doigts (6413), de sorte que les saillies (6414) sont coincées dans la rainure (6321) ; et
une partie arrière (6463) ayant le ressort de serrage (644) inséré autour d'elle, la partie arrière (6463) étant reliée aux moyens de transfert de poids (610, 620).

6. Le dispositif (10) de réglage de longueur selon la revendication 5, dans lequel la partie de corps (6461) a une forme conique dont le diamètre devient plus petit à mesure qu'il se rapproche de la partie tête (6462), et
dans lequel une partie effilée de la partie de corps (6461) est une partie au niveau de laquelle les doigts (6413) sont assis tout en étant contractés lorsque la partie de tête (6462) est extraite des doigts (6413).

7. Le dispositif (10) de réglage de longueur selon la revendication 1, dans lequel les moyens (610, 620) de transfert de poids comprennent :
un ensemble (610) formant tige de commencement installé tout au long d'une limite entre la poignée (100) et le bâton principal (200), l'ensemble (610) formant tige de commencement étant connecté au bouton poussoir (120) ; et
un ensemble (620) formant tige d'action installé à l'intérieur du bâton principal (200), l'ensemble (620) formant tige d'action reliant l'ensemble de tige de commencement (610) et l'ensemble (640) de serrage l'un à l'autre.

8. Le dispositif (10) de réglage de longueur selon la revendication 7, dans lequel l'ensemble (610) formant tige de commencement, l'ensemble (620) formant tige d'action et l'ensemble de serrage (640) sont reliés selon une ligne droite pour servir d'arbre fixe,
dans lequel l'ensemble (630) de tubes tournants sert d'arbre d'entraînement, et
dans lequel, lorsque l'ensemble (630) de tubes tournants est dans l'état déverrouillé par l'ensemble de serrage (640) selon une opération de poussée du bouton poussoir (120), l'ensemble (630) de tubes tournants se déplace verticalement avec le bâton d'expansion (300) le long de l'arbre fixe, de sorte que le bâton d'expansion (300) est rétracté dans le / extrait du bâton principal (200).
